# EUROPÄISCHE PATENTANMELDUNG

(11) **EP 4 697 589 A1**
(43) Veröffentlichungstag der Anmeldung: **18.02.2026**
(21) Anmeldenummer: 25193641.5
(22) Anmeldetag: 04.08.2025
(51) Int. Cl.: H02S 20/26, F24S 25/30, F24S 25/33, F24S 25/60, E04F 13/08, E04F 13/21

(54) **SICHERUNGSVORRICHTUNG**

(30) Priorität: 16.08.2024 DE 102024123397
(71) Anmelder: SL Rack GmbH, 83527 Haag (DE)
(72) Erfinder: Achatz, Florian, 94259 Kirchberg i.W. (DE)
(74) Vertreter: Lichtnecker, Markus Christoph

(57) **Zusammenfassung**

Die Erfindung betrifft eine Sicherungsvorrichtung (14) für wenigstens ein Fassadenelement (12), vorzugsweise Solar- und/oder Photovoltaikmodul, aufweisend eine Tragschienenhalterung (20) zur Befestigung an einer Tragschiene (10) und eine Fassadenelementhalterung (25)zur Befestigung am Fassadenelement, wobei die Fassadenelementhalterung an der Tragschienenhalterung befestigbar oder befestigt ist, eine Fixiervorrichtung (18) zum Fixieren am Fassadenelement aufweist und wenigstens eine seilartige Haltevorrichtung (16) aufweist, welche sich zumindest abschnittsweise zwischen der Tragschienenhalterung und der Fixiervorrichtung erstreckt.

## Beschreibung

Die Erfindung betrifft eine Sicherungsvorrichtung für wenigstens ein Fassadenelement, vorzugsweise Solar- und/oder Photovoltaikmodul.

Fassadenelemente werden beispielsweise an Tragschienen befestigt. Eine zusätzliche Sicherungsvorrichtung ist bisher nicht vorgesehen.

Beispielsweise bei starken Winden kann es vorkommen, dass sich das Fassadenelement ungewollt löst.

Dies kann im Schlimmsten Fall zu Sach- und/oder Personenschäden führen.

Es ist daher eine Aufgabe der Erfindung, eine Sicherungsvorrichtung sowie ein System mit einer Sicherungsvorrichtung und einer Tragschiene zu schaffen, mit der/dem auf einfache und kostengünstige Weise die Sicherheit von Fassadenelementen erhöht wird.

Die Lösung dieser Aufgabe erfolgt durch die Gegenstände der unabhängigen Ansprüche.

Erfindungsgemäß ist die Sicherungsvorrichtung zum Sichern wenigstens eines Fassadenelements ausgebildet und/oder kann hierzu verwendet werden.

Bei dem Fassadenelement kann es sich vorzugsweise um ein Solar- und/oder Photovoltaikmodul handeln.

Die Sicherungsvorrichtung kann beispielsweise genau ein Fassadenelement sichern. Alternativ ist es auch möglich, dass eine Sicherungsvorrichtung mehrere, z.B. zwei, Fassadenelemente sichert.

Vorzugsweise werden sämtliche Fassadenelemente einer Fassade mit Sicherungsvorrichtungen gesichert.

Die Sicherungsvorrichtung weist eine Tragschienenhalterung zur Befestigung an einer Tragschiene auf.

Beispielsweise ist die Tragschienenhalterung lösbar an der Tragschiene befestigbar, z.B. verschraubbar, oder befestigt, z.B. verschraubt.

Die Sicherungsvorrichtung weist eine Fassadenelementhalterung zur Befestigung am Fassadenelement auf, wobei die Fassadenelementhalterung an der Tragschienenhalterung befestigbar oder befestigt ist.

Vorzugsweise ist die Fassadenelementhalterung an der Tragschienenhalterung lösbar befestigbar oder befestigt. Alternativ kann die Fassadenelementhalterung auch dauerhaft und/oder unlösbar mit der Tragschienenhalterung verbunden und/oder einstückig mit der Tragschienenhalterung ausgebildet sein.

Die Fassadenelementhalterung weist eine Fixiervorrichtung zum, vorzugsweise lösbaren, Fixieren am Fassadenelement auf.

Ferner weist die Fassadenelementhalterung wenigstens oder genau eine seilartige Haltevorrichtung auf, welche sich zumindest abschnittsweise zwischen der Tragschienenhalterung und der Fixiervorrichtung erstreckt.

Der Begriff "seilartige Haltevorrichtung" ist breit zu verstehen und umfasst eine beliebige, längliche, flexible Haltevorrichtung.

Die seilartige Haltevorrichtung kann z.B. ein Seil, eine Schnur, einen Schlauch, ein Band, eine Kette, einen Draht und/oder ein Kabel aufweisen oder daraus bestehen. Die Haltevorrichtung kann beispielsweise ein Metall-, Kunststoff- und/oder Metallmaterial aufweisen oder daraus bestehen. Im montierten Zustand hängt die Haltevorrichtung vorzugsweise durch. So ist ein gewisses Spiel vorhanden. Auf diese Weise können auch unterschiedlich große Fassadenelemente gesichert werden.

Bevorzugt erstreckt sich die seilartige Haltevorrichtung vollständig zwischen der Tragschienenhalterung und der Fixiervorrichtung. Beispielsweise kann die Haltevorrichtung die Fixiervorrichtung und die Tragschienenhalterung miteinander verbinden.

Weiterbildungen der Erfindung sind auch den abhängigen Ansprüchen, der Beschreibung sowie den beigefügten Zeichnungen zu entnehmen.

Gemäß einer Ausführungsform weist die Fassadenelementhalterung eine zweite Fixiervorrichtung und eine zweite, seilartige Haltevorrichtung auf, welche sich zumindest abschnittsweise zwischen der Tragschienenhalterung und der zweiten Fixiervorrichtung erstreckt.

Die zweite Fixiervorrichtung und/oder die zweite, seilartige Haltevorrichtung können bevorzugt baugleich zur ersten Fixiervorrichtung bzw. ersten Haltevorrichtung ausgebildet sein.

Die zweite seilartige Haltevorrichtung kann z.B. ein Seil, eine Schnur, einen Schlauch, ein Band, eine Kette, einen Draht und/oder ein Kabel aufweisen oder daraus bestehen. Die Haltevorrichtung kann beispielsweise ein Metall-, Kunststoff- und/oder Metallmaterial aufweisen oder daraus bestehen. Im montierten Zustand hängt die zweite Haltevorrichtung vorzugsweise durch. So ist ein gewisses Spiel vorhanden. Auf diese Weise können auch unterschiedlich große Fassadenelemente gesichert werden.

Bevorzugt erstreckt sich die zweite seilartige Haltevorrichtung vollständig zwischen der Tragschienenhalterung und der zweiten Fixiervorrichtung. Beispielsweise kann die Haltevorrichtung die Fixiervorrichtung und die Tragschienenhalterung miteinander verbinden.

Die erste Haltevorrichtung und die zweite Haltevorrichtung können sich bezüglich der Tragschienenhalterung vorzugsweise in unterschiedliche Richtungen erstrecken.

Die erste Fixiervorrichtung und die zweite Fixiervorrichtung können vorzugsweise an unterschiedlichen Seiten des Fassadenelements fixiert werden. Dies erhöht die Sicherheit des Fassadenelements.

Die erste und zweite seilartige Haltevorrichtung können als separate Bauteile oder aber als gemeinsames, z.B. einstückiges, Bauteil ausgebildet sein.

Nach einer weiteren Ausführungsform ist die Fixiervorrichtung als Karabiner ausgebildet oder umfasst einen Karabiner.

Beispielsweise kann auch die zweite Fixiervorrichtung als ein zweiter Karabiner ausgebildet sein oder einen zweiten Karabiner umfassen.

Karabiner sind kostengünstig und ermöglichen eine einfache Montage.

Gemäß einer weiteren Ausführungsform weist die Fassadenelementhalterung einen Tragschienenkarabiner auf, über den die Fassadenelementhalterung an der Tragschienenhalterung befestigbar oder befestigt ist.

Dies ermöglicht eine einfache Handhabung, da die Fassadenelementhalterung nach der Montage der Tragschienenhalterung mit dieser verbunden werden kann.

Alternativ zu einem Tragschienenkarabiner ist es auch möglich, dass die seilartige Haltevorrichtung beispielsweise unmittelbar an der Tragschienenhalterung befestigt ist. So kann die Haltevorrichtung zum Beispiel durch eine Halteaussparung der Tragschienenhalterung hindurchgefädelt und/oder daran festgeknotet sein.

Nach einer weiteren Ausführungsform weist die Tragschienenhalterung eine Halteaussparung, vorzugsweise für einen Tragschienenkarabiner der Fassadenelementhalterung, auf.

Der Tragschienenkarabiner kann hierbei beispielsweise schnell und/oder einfach in die Halteaussparung eingeklickt werden.

Alternativ kann z.B. die seilartige Haltevorrichtung durch die Halteaussparung der Tragschienenhalterung hindurchgefädelt und/oder daran festgeknotet werden.

Gemäß einer weiteren Ausführungsform weist die Tragschienenhalterung eine Einhängevorrichtung zum Einhängen und/oder eine Einschiebevorrichtung zum Einschieben in die Tragschiene auf.

Die Tragschienenhalterung kann somit schnell und einfach an der Tragschiene befestigt werden.

Nach einer weiteren Ausführungsform weist die Tragschienenhalterung eine Klemmvorrichtung zum Verklemmen an der Tragschiene auf.

Das Verklemmen kann zusätzlich oder alternativ zum Einhängen bzw. Einschieben erfolgen.

Beispielsweise kann die Tragschienenhalterung mehrteilig ausgebildet sein. Eine Basis kann z.B. über eine Schraube oder einen Bolzen mit einem Gegenstück verschraubt werden. Ein zwischen der Basis und dem Gegenstück angeordneter Abschnitt der Tragschiene kann hierbei festgeklemmt werden.

Die Erfindung betrifft ein System mit einer erfindungsgemäßen Sicherungsvorrichtung und einer Tragschiene für wenigstens ein Fassadenelement.

An einer Tragschiene werden vorzugsweise mehrere Fassadenelemente nebeineinander befestigt.

Die Tragschiene ist bevorzugt horizontal orientiert.

Beispielsweise kann die Tragschiene an einer Wand befestigt, z.B. verschraubt, sein.

Es war überraschend, dass dieselbe Tragschiene, welche das Fassadenelement trägt, auch zur Befestigung der Sicherungsvorrichtung verwendet werden kann.

Auf diese Weise können Kosten eingespart werden.

Gemäß einer Ausführungsform weist das System wenigstens ein Fassadenelement, vorzugsweise ein Solar- und/oder Photovoltaikmodul, auf.

Das Fassadenelement wir an der Tragschiene montiert und anschließend über die Sicherungsvorrichtung gesichert.

Nach einer weiteren Ausführungsform weist das Fassadenelement wenigstens eine Halteöffnung für die Fixiervorrichtung auf.

Beispielsweise können mehrere Halteöffnungen vorgesehen sein. Die Halteöffnungen können gegebenenfalls ohnehin bereits vorhanden sein, wodurch Kosten eingespart werden können.

So kann die Fixiervorrichtung und/oder die zweite Fixiervorrichtung auf einfache Weise an dem Fassadenelement fixiert, z.B. eingeklickt, werden.

Alle hier beschriebenen Aspekte, Ausführungsformen und Merkmale der Erfindung können, vorzugsweise auch losgelöst von der konkreten Ausgestaltung, in deren Zusammenhang sie erwähnt werden, jeweils miteinander kombiniert werden. Vorzugsweise können alle Gegenstände der abhängigen Ansprüche untereinander und mit jedem Gegenstand der unabhängigen Ansprüche kombiniert werden. Generell wird bemerkt, dass Begriffe wie "ein" bzw. "eine" nicht zwingend "genau ein" bzw. "genau eine" bedeuten, wobei dies ebenso möglich ist. Die Begriffe "ein" bzw. "eine" können daher als "mindestens oder genau ein" bzw. "mindestens oder genau eine" verstanden werden. Die Verwendung des Singulars schließt vorzugsweise das Vorliegen der Bauteile im Plural mit ein und umgekehrt.

Es wird festgehalten, dass "vorzugsweise" und "bevorzugt" als "preferably" auf Englische übersetzt werden können. Ein durch "vorzugsweise" oder "bevorzugt" eingeleitetes Merkmal ist rein fakultativ, kann weggelassen werden und stellt keine Einschränkung, beispielsweise der Ansprüche, dar.

Die Erfindung wird im Folgenden beispielhaft unter Bezugnahme auf die Zeichnungen beschrieben. Es zeigen:
- Fig. 1: eine vordere Perspektivansicht einer Ausführungsform eines erfindungsgemäßen Systems,
- Fig. 2: eine hintere Perspektivansicht des Systems gemäß Fig. 1,
- Fig. 3: eine hintere Perspektivansicht einer weiteren Ausführungsform eines erfindungsgemäßen Systems,
- Fig. 4: eine Perspektivansicht einer Ausführungsform einer erfindungsgemäßen Sicherungsvorrichtung,
- Fig. 5: eine Perspektivansicht einer Ausführungsform einer Tragschienenhalterung einer erfindungsgemäßen Sicherungsvorrichtung,
- Fig. 6: eine Seitenansicht der Tragschienenhalterung gemäß Fig. 5,
- Fig. 7: eine Draufsicht der Tragschienenhalterung gemäß Fig. 5,
- Fig. 8: eine seitliche Perspektivansicht einer Ausführungsform eines erfindungsgemäßen Systems, und
- Fig. 9: eine hintere Perspektivansicht des Systems gemäß Fig. 8.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Die Anzahl, Länge, Form und/oder Position der Bauteile ist grundsätzlich beliebig.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

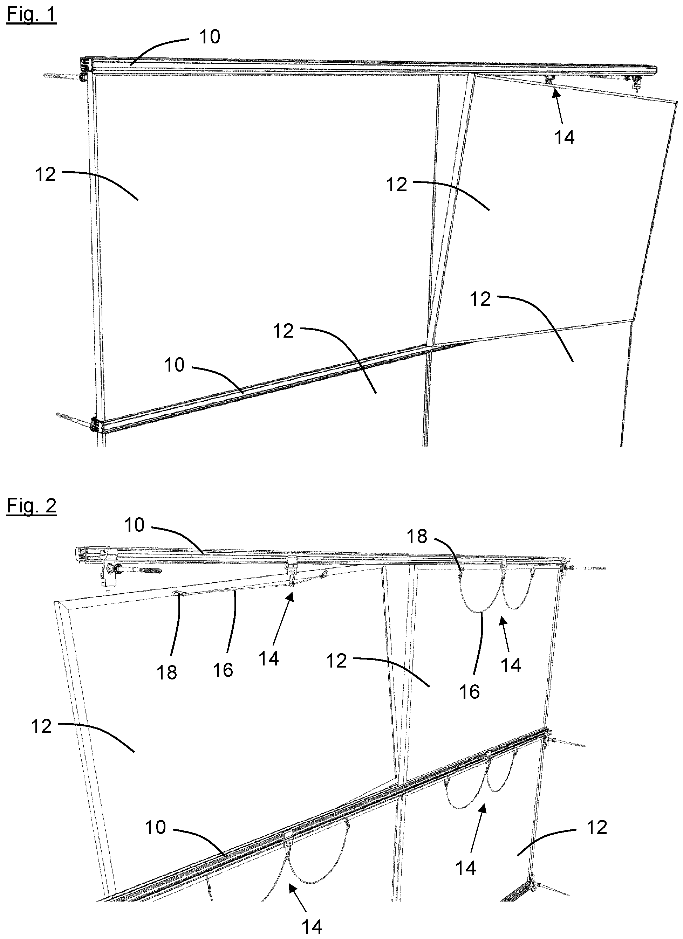

Fig. 1 zeigt Tragschienen 10, an denen Fassadenelemente 12, z.B. Solar- und/oder Photovoltaikmodule, befestigt sind.

Das rechte Fassadenelement 12 wird von einer Sicherungsvorrichtung 14 vor einem Herabfallen gesichert.

Die Sicherungsvorrichtung 14 ist auch in Fig. 2 dargestellt.

Im Ernstfall spannen sich seilartige Haltevorrichtungen 16 der Sicherungsvorrichtung und verhindern so ein Herabfallen des Fassadenelements 12.

Im Ruhezustand können die Haltevorrichtungen 16 entspannt sein und z.B. einen Bogen bilden.

Die Enden der ersten Haltevorrichtungen 16 können mit ersten Fixiervorrichtungen 18 verbunden sein, welche wiederum am Fassadenelement 12 fixiert sind.

Das Fixieren kann z.B. an einer oberen Kante des Fassadenelements 12 erfolgen.

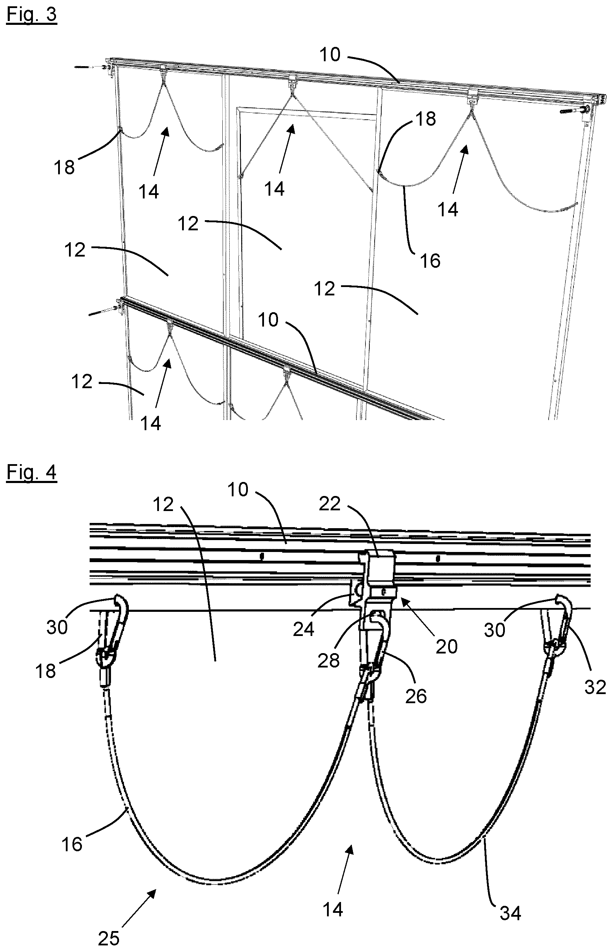

Alternativ kann, wie in Fig. 3 gezeigt ist, eine Fixierung an seitlichen Kanten des Fassadenelements 12 erfolgen.

Eine Detailansicht der Sicherungsvorrichtung 14 ist in Fig. 4 gezeigt.

Die Sicherungsvorrichtung 14 weist eine Tragschienenhalterung 20 zur Befestigung an der Tragschiene 10 auf.

Die Tragschienenhalterung 20 kann eine Basis 22 und ein Gegenstück 24 aufweisen. Die Basis 22 und das Gegenstück 24 können zum Beispiel miteinander verschraubt sein, z.B. mittels einer Schraube oder eines Bolzens.

Beispielsweise kann die Tragschienenhalterung 20 an der Tragschiene 10 eingehängt, verschraubt und/oder festgeklemmt werden.

Die Sicherungsvorrichtung 14 weist eine Fassadenelementhalterung 25 zur Befestigung am Fassadenelement 12 auf.

Die Fassadenelementhalterung 25 ist über einen Tragschienenkarabiner 26 mit der Tragschienenhalterung 20 verbunden.

Hierzu kann die Basis 22 der Tragschienenhalterung 20 eine Halteaussparung 28 aufweisen, in welche der Tragschienenkarabiner 26 eingeklickt wird.

Die Fassadenelementhalterung 25 weist die erste, als Karabiner ausgebildete Fixiervorrichtung 18 auf, welche zum Fixieren in eine Halteöffnung 30 des Fassadenelements 12 eingeklickt werden kann.

Die Fassadenelementhalterung 25 weist die erste seilartige Haltevorrichtung 16 auf, welche sich zwischen der Tragschienenhalterung 20 bzw. dem Tragschienenkarabiner 26 und der ersten Fixiervorrichtung 18 erstreckt.

Ferner kann die Fassadenelementhalterung 25 eine zweite, als Karabiner ausgebildete Fixiervorrichtung 32 und eine zweite seilartige Haltevorrichtung 34 aufweisen, welche sich zwischen der Tragschienenhalterung 20 bzw. dem Tragschienenkarabiner 26 und der zweiten Fixiervorrichtung 32 erstreckt.

Bei den Karabinern 18, 32 bzw. dem Tragschienenkarabiner 26 kann es sich vorzugsweise um nicht-verschließbare Karabiner, z.B. Schnapper, handeln. Diese können besonders schnell und einfach montiert werden.

Alternativ können auch verschließbare Karabiner, beispielsweise selbstverriegelnde, z.B. Twistlock, oder nicht-selbstverriegelnde Karabiner, z.B. Schrauber, eingesetzt werden.

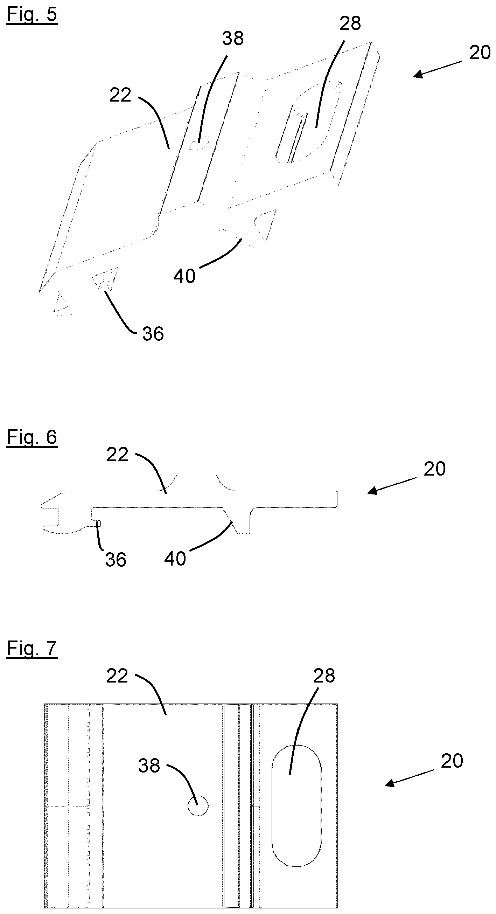

Die Fig. 5 bis 7 zeigen die Basis 22 der Tragschienenhalterung 20. Neben der Halteaussparung 28 weist diese eine Einhängevorrichtung 36 zum Einhängen in die Tragschiene 10 auf.

Ferner kann eine Befestigungsöffnung 38 für eine Schraube oder einen Bolzen vorgesehen sein. Die Befestigungsöffnung 38 kann vorzugsweise ein Innengewinde aufweisen.

Schließlich kann die Basis 22 einen Vorsprung 40 für das Gegenstück 24 aufweisen. Das Gegenstück 24 kann sich beispielsweise am Vorsprung 40 abstützen. Dadurch wird der Halt verbessert.

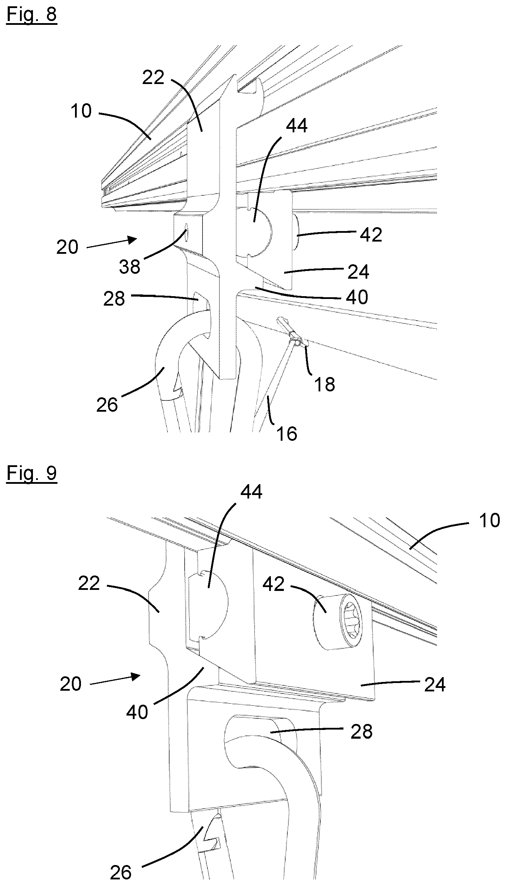

In den Fig. 8 und 9 sind die Basis 22 und das Gegenstück 24 über eine Schraube 42 miteinander verbunden.

Wird die Schraube 42 angezogen, so schiebt sich das Gegenstück 24 über den keilförmigen Vorsprung 40 nach oben und verklemmt sich.

Ein Verformungselement 44 kann dabei verformt, z.B. gequetscht, werden.

Das Verformungselement 44 kann beispielsweise ein Kunststoffmaterial, z.B. ein Gummimaterial, aufweisen oder daraus bestehen.

Vorzugsweise kann sich das Verformungselement 44 über die gesamte Breite des Gegenstücks 24 erstrecken.

### Bezugszeichenliste

- 10: Tragschiene
- 12: Fassadenelement
- 14: Sicherungsvorrichtung
- 16: erste seilartige Haltevorrichtung
- 18: erste Fixiervorrichtung, Karabiner
- 20: Tragschienenhalterung
- 22: Basis
- 24: Gegenstück
- 25: Fassadenelementhalterung
- 26: Tragschienenkarabiner
- 28: Halteaussparung
- 30: Halteöffnung
- 32: zweite Fixiervorrichtung, Karabiner
- 34: zweite seilartige Haltevorrichtung
- 36: Einhängevorrichtung
- 38: Befestigungsöffnung
- 40: Vorsprung
- 42: Schraube
- 44: Verformungselement

## Patentansprüche

1. Sicherungsvorrichtung (14) für wenigstens ein Fassadenelement (12), vorzugsweise Solar- und/oder Photovoltaikmodul, aufweisend eine Tragschienenhalterung (20) zur Befestigung an einer Tragschiene (10) und
eine Fassadenelementhalterung (25) zur Befestigung am Fassadenelement (12), wobei die Fassadenelementhalterung (25) an der Tragschienenhalterung (20) befestigbar oder befestigt ist, eine Fixiervorrichtung (18) zum Fixieren am Fassadenelement (12) aufweist und wenigstens eine seilartige Haltevorrichtung (16) aufweist, welche sich zumindest abschnittsweise zwischen der Tragschienenhalterung (20) und der Fixiervorrichtung (18) erstreckt.

2. Sicherungsvorrichtung (14) nach Anspruch 1,
**dadurch gekennzeichnet,**
**dass** die Fassadenelementhalterung (25) eine zweite Fixiervorrichtung (32) und eine zweite, seilartige Haltevorrichtung (34) aufweist, welche sich zumindest abschnittsweise zwischen der Tragschienenhalterung (20) und der zweiten Fixiervorrichtung (32) erstreckt.

3. Sicherungsvorrichtung (14) nach Anspruch 1 oder 2,
**dadurch gekennzeichnet,**
**dass** die Fixiervorrichtung (18) als Karabiner ausgebildet ist oder einen Karabiner umfasst.

4. Sicherungsvorrichtung (14) nach einem der vorhergehenden Ansprüche, **dadurch gekennzeichnet,**
**dass** die Fassadenelementhalterung (25) einen Tragschienenkarabiner (26) aufweist, über den die Fassadenelementhalterung (25) an der Tragschienenhalterung (20) befestigbar oder befestigt ist.

5. Sicherungsvorrichtung (14) nach einem der vorhergehenden Ansprüche, **dadurch gekennzeichnet,**
**dass** die Tragschienenhalterung (20) eine Halteaussparung (28), vorzugsweise für einen Tragschienenkarabiner (26) der Fassadenelementhalterung (25), aufweist.

6. Sicherungsvorrichtung (14) nach einem der vorhergehenden Ansprüche, **dadurch gekennzeichnet,**
**dass** die Tragschienenhalterung (20) eine Einhängevorrichtung (36) zum Einhängen und/oder eine Einschiebevorrichtung zum Einschieben in die Tragschiene (10) aufweist.

7. Sicherungsvorrichtung (14) nach einem der vorhergehenden Ansprüche, **dadurch gekennzeichnet,**
**dass** die Tragschienenhalterung (20) eine Klemmvorrichtung zum Verklemmen an der Tragschiene (10) aufweist.

8. System mit einer Sicherungsvorrichtung (14) nach einem der vorhergehenden Ansprüche und einer Tragschiene (10) für wenigstens ein Fassadenelement (12).

9. System nach Anspruch 8,
**dadurch gekennzeichnet,**
**dass** das System wenigstens ein Fassadenelement (12), vorzugsweise ein Solar- und/oder Photovoltaikmodul, aufweist.

10. System nach Anspruch 9,
**dadurch gekennzeichnet,**
**dass** das Fassadenelement (12) wenigstens eine Halteöffnung (30) für die Fixiervorrichtung aufweist.
